Europäisches Patentamt

European Patent Office

Office européen des brevets

(19)

(11) Veröffentlichungsnummer : **0 050 742**
**B1**

(12) **EUROPÄISCHE PATENTSCHRIFT**

(45) Veröffentlichungstag der Patentschrift :
19.12.84

(21) Anmeldenummer : 81107675.1

(22) Anmeldetag : 26.09.81

(51) Int. Cl.³ : **C 08 G 69/26**

(54) Transparente kochwasser- und sterilisationsbeständige Polyamide.

(30) Priorität : 24.10.80 DE 3040155

(43) Veröffentlichungstag der Anmeldung :
05.05.82 Patentblatt 82/18

(45) Bekanntmachung des Hinweises auf die Patenterteilung : 19.12.84 Patentblatt 84/51

(84) Benannte Vertragsstaaten :
AT BE CH DE FR GB IT LI LU NL SE

(56) Entgegenhaltungen :
DE-A- 1 520 939
DE-A- 2 060 703
US-A- 3 937 688
Chemical Abstracts Band 71, Nr. 12 22. September 1969 Columbus, Ohio, USA McGALL et al. "Polymer intermediates and polymers derived from 5-tert-butyl-m-xylene" Seite 5, Spalte 1, Abstract Nr. 50581b

(73) Patentinhaber : DYNAMIT NOBEL AKTIENGESELL-SCHAFT
Postfach 1209
D-5210 Troisdorf, Bez. Köln (DE)

(72) Erfinder : Blaschke, Franz, Dr.
Jägerstrasse 24
D-5810 Witten-Annen (DE)
Erfinder : Meyer, Günther, Dr.
Augustinusstrasse 6
D-5210 Troisdorf-Sieglar (DE)
Erfinder : Schade, Gerhard, Dr.
Akazienweg 13
D-5810 Witten-Bommern (DE)
Erfinder : Vollkommer, Norbert, Dr.
Schumannstrasse 5
D-5210 Troisdorf-Kriegsdorf (DE)

Jouve, 18, rue St-Denis, 75001 Paris, France

## Beschreibung

Die Erfindung betrifft transparente, thermoplastisch verformbare Copolyamide mit guter Wärmeformbeständigkeit und Beständigkeit gegen Wasser bei Siedetemperatur sowie unter Sterilisationsbedingungen auf Basis von Bisaminomethyl-tricyclodecan.

Polyamide auf Basis von Terephthalsäure und/oder Isophthalsäure sowie eines Diamingemisches aus 5-49 Mol % Bis-aminomethyl-tricyclodecan und 51-95 Mol % 2,2,4 (2,4,4)-Trimethylhexamethylendiamin sind aus der DE-A-28 32 468 bekannt.

Polyamide dieser Zusammensetzung besitzen jedoch eine nur geringe Heißwasserbeständigkeit und ungenügende Beständigkeit gegen Wasser unter Sterilisierungsbedingungen.

Das Produkt des nachfolgenden Vergleichsbeispiels A beispielsweise beginnt nach 3 Tagen in siedendem Wasser zu trüben und ist nach 4 Tagen vollständig trübe. Unter üblichen Sterilisationsbedingungen bei 121 °C im Autoklaven unter Eigendruck beginnt die Trübung bereits nach 4 Stunden d. h. das Material ist nich brauchbar für sterilisationsfeste Formkörper.

Weiterhin ist die Wasseraufnahme sehr hoch. Beispielsweise beträgt die Wasseraufnahme in siedendem Wasser nach 336 Stunden 8,2 Gew.-% und unter Sterilisationsbedingungen nach 15 Stunden bereits 12,8 %. Entsprechend ist unter diesen Bedingungen die Maßhaltigkeit der Formkörper schlecht.

Es bestand deshalb die Aufgabe, langfristig kochwasserbeständige und sterilisationsfeste Polyamide mit geringer Wasseraufnahme und hoher Maßhaltigkeit bei der Sterilisierung herzustellen. Diese Forderung wird durch die erfindungsgemäßen Polyamide erfüllt.

Gegenstand der Erfindung sind daher Polyamide, erhalten durch Polykondensation eines Gemisches aus

a) 10-50 Mol % Decandicarbonsäure,
b) 10-80 Mol % 5-tert-Butyl-isophthalsäure,
c) 0-70 Mol % Isophthalsäure und/oder Terephthalsäure, sowie,
d) 100 Mol % 3(4), 8(9) Bisaminomethyltricyclo-[$5.2.1.0^{2,6}$]-decan,

worin stets die Summe aus den Dicarbonsäurekomponenten a) + b) + c) = 100 Mol % sein muß.

Die bevorzugte Zusammensetzung enthält a) 20-40 Mol % Decandicarbonsäure (DDS), b) 20-80 Mol % 5-tert-Butyl-isophthalsäure (BIPS), c) 0-60 Mol % Isophthalsäure (IPS) und/oder Terephthalsäure (TPS) sowie 100 Mol % des genannten Bisaminomethyl-tricyclodecans (TDC-Diamin), wobei stets die Summe aus den Dicarbonsäurekomponenten a) + b) + c) = 100 Mol % sein muß.

Die Polyamide zeigen sowohl die geforderte langfristige Siedewasserbeständigkeit, was bedeutet, daß Spritzlinge mindestens 3 Monate entsprechend > 2 100 Stunden, ohne Eintrübung und Deformation in kochendem Wasser gelagert werden können, als auch die geforderte Sterilisationsfestigkeit, wobei Spritzlinge > 48 Stunden ohne Eintrübung und Deformation in Wasser bei 121 °C unter Druck gelagert werden können.

Die beste Sterilisierfähigkeit und die geringste Wasseraufnahme werden erreicht, wenn auf die Mitverwendung von Iso- und/oder Terephthalsäure ganz verzichtet wird und die Glasübergangstemperatur Tg ≥ 170 °C beträgt, was bei einem tert.-Butylisophthalsäure/Decandicarbonsäure-Molverhältnis ≥ 65/35 der Fall ist.

Für solche hochwertigen Verwendungen sind die von IPS und TPS freien Polyamide daher weiterhin bevorzugt. Ausreichende Kochwasserbeständigkeit und Sterilisierfähigkeit wird jedoch auch bei Mitverwendung von Iso- und/oder Terephthalsäure in den obengenannten Mengen erzielt. Die Glastemperatur soll auch in diesem Falle im vorgenannten Bereich liegen.

Die erfindungsgemäßen Polyamide lassen sich in an sich bekannter Weise auf dem Wege der Schmelzpolykondensation herstellen.

Hierbei können die Kondensationskomponenten auch durch ihre funktionellen Derivate ersetzt werden, wie beispielsweise die TPS bevorzugt durch den Dimethylester. Wird dieser herangezogen, wird als erste Reaktionsstufe der Polyamid-Herstellung die Aminolyse, bevorzugt mit dem gesamten zuzugebenden Diamin, jedoch ohne die gegebenenfalls mitzuverwendenden freien Dicarbonsäuren oder mit nur einem Teil derselben, zu Ende geführt, bevor letztere zugesetzt bzw. ergänzt werden und die Polykondensation fortgeführt wird.

Dicarbonsäurekomponenten und Diamin werden in annähernd stöchiometrischen Mengen mit geringem Diaminüberschuß von bis zu 6 Mol %, bevorzugt bis zu 4 Mol %, bezogen auf die 100 Mol % Dicarbonsäure, eingesetzt. Der Überschuß an Diamin wird entsprechend den bei den jeweiligen Kondensationsbedingungen auftretenden Verlusten durch Zersetzung bzw. Verflüchtigung mit dem Wasserdampf gewählt. Im Produkt besteht kein Diaminüberschuß. Zur Homogenisierung des Salz- bzw. Oligomerengemisches wird gegebenenfalls Wasser zugegeben sowie gegebenenfalls Kondensationshilfsstoffe wie $H_2PO_3$, $H_3PO_3$, Ameisensäure oder Essigsäure.

Die während des Abdestillierens des Wassers entstehende Oligoamidschmelze wird unter Inertgasstrom bei steigender Temperatur kondensiert und dann im Temperaturbereich von 260-300 °C, vorzugsweise 270-290 °C, gegebenenfalls unter Vakuum, bis zum gewünschten Molgewicht polykondensiert.

Ein Arbeiten unter Druck in der Salz- bzw. Oligoamid-Stufe ist nicht notwendig, da die Ansätze der erfindungsgemäßen Zusammensetzung in jeder Reaktionsphase unter Normaldruck rührbar bleiben.

Die transparenten, nahezu farblosen Polyamide mit Glasübergangstemperaturen im Bereich 160-188 °C, für den obengenannten Vorzugsbereich der erfindungsgemäßen Polyamide 165-176 °C, lassen sich noch problemlos auf den üblichen Formgebungsmaschinen verarbeiten.

Sie können Zusatzstoffe, insbesondere Füll- und Verstärkungsmaterialien oder Flammschutzmittel oder Farbstoffe oder Stabilisatoren enthalten.

## Beispiel 1

Zur Herstellung eines Polyamids der Rezeptur

30 Mol % DDS
40 Mol % BIPS
30 Mol % IPS
100 Mol % TCD-Diamin

werden 690 g (3,0 Mol) DDS, 498 g (3 Mol) IPS und 888 g (4,0 Mol) BIPS sowie 1 998 g (10 Mol + 3 % Überschuß) TCD-Diamin zusammen mit 4 l Wasser in einen Autoklaven chargiert und zur Homogenisierung und Salzbildung auf 100 °C erhitzt. Unter weiterer Temperatursteigerung wird das Wasser abdestilliert und der Ansatz bei 290 °C auskondensiert. Das transparente, farblose Polyamid wird durch ein Wasserbad ausgesponnen und granuliert.

Es besitzt eine in 1 %iger Lösung (1 g in 100 ml Mischung Phenol/o-Dichlorbenzol = 60/40) bestimmte Lösungsviskosität $\eta$ sp/C von 1,98 dl/g und eine nach der DSC-Methode (Differential-Thermo-Calorimetrie) bestimmte Glastemperatur von 174 °C. Der CONH-Gehalt ist 0,547 Mol/100 g.

Ein Teil des Polyamids wird auf einer Spritzgußmaschine zu Prüfstäben verspritzt ; ein anderer Teil zu 1 mm und 4 mm dicken Platten verpreßt.

Die Formkörper sind einwandfrei transparent.

Kochwasserbeständigkeit :

Normkleinstäbe und 1 mm-Preßplatten wurden 2 180 Stunden in siedendem Wasser gelagert. Die Proben waren völlig transparent und ohne Deformation. Wasseraufnahme nur 4,2 Gew.-%.

Sterilisierfestigkeit :

Normkleinstäbe wurden 96 Stunden in Wasser bei 121 °C unter Druck geprüft :

keine Eintrübung oder Deformation. Erst nach 120 Stunden beginnende Eintrübung, jedoch keine Deformation. Nach 96 Stunden ist die Wasseraufnahme 4,7 Gew.-%.

Mechanische Eigenschaften :

| | |
|---|---|
| Schlagzähigkeit : | ohne Bruch |
| Kerbschlagzähigkeitspritzfrisch : | 7,6 KJ/m² |
| nach 5 Tagen Normklima : | 9,6 KJ/m² |
| Streckspannung : | 77 N/mm² |
| Reißfestigkeit : | 61 N/mm² |
| Reißdehnung : | 86 % |
| Biegefestigkeit : | 114 N/mm² |
| E-Modul (Biegeversuch) : | 2 800 N/mm² |

Therm. Eigenschaften :
Wärmeformbeständigkeit

| | |
|---|---|
| NACH ISO ; R 75 ; A | 136 °C |
| B | 147 °C |
| nach Vicat | 152 °C |

## Beispiele 2 bis 8

Nach der Verfahrensweise von Beispiel 1 werden die Polyamide gemäß den in nachstehender Tabelle 1 aufgeführten Rezepturen hergestellt und geprüft. Die für die Kondensationskomponenten angegebenen Mengenwerte bedeuten Mol % ; es wurden 2 Mol % Diaminüberschuß eingesetzt.

Tabelle 1

| Beispiel | 2 | 3 | 4 | 5 | 6 | 7 | 8 |
|---|---|---|---|---|---|---|---|
| DDS | 40 | 30 | 40 | 25 | 30 | 30 | 30 |
| BIPS | 60 | 70 | 40 | 10 | 20 | 30 | 25 |
| IPS | — | — | 20 | 65 | 50 | 40 | 45 |
| TCD-Diamin | 100 | 100 | 100 | 100 | 100 | 100 | 100 |
| $\eta$ red[2]) [dl/g] | 1,53 | 1,64 | 1,44 | 1,83 | 1,47 | 1,38 | 1,79 |
| Tg [°C] | 161° | 176° | 165° | 178° | 168° | 173° | 170° |
| CONH [Mol/100 g] | 0,522 | | 0,537 | 0,578 | 0,564 | 0,555 | 0,559 |
| Kochwasserbeständigkeit[1]) | transp. n. 2 180 Std. | transp. n. 2 180 Std. | transp. n. 2 180 Std. | transp. n. 2 180 Std. | transp. n. 2 180 Std. | transp. n. 2 180 Std. | transp. n. 2 180 Std. |
| Wasseraufnahme[1]) im Siedewasser nach 2 180 Stunden (Gew.-%) | 2,8 | 2,9 | 3,6 | 4,2 | 3,9 | 3,7 | 3,8 |
| Sterilisationsfestigkeit[1]) in Wasser bei 121 °C unter Druck | transp. n. 48 Std. | transp. n. 192 Std. | transp. n. 12 Std. | transp. n. 48 Std. | transp. n. 24 Std. | transp. n. 72 Std. | transp. n. 48 Std. |

[1]) Normkleinstäbe als Prüflinge.
[2]) 1 Gew.-%ig in Phenol/o-Dichlorbenzol = 60/40.

## Beispiel 9

Zur Herstellung eines Polyamids der Rezeptur

50 Mol % TPS
30 Mol % DDS
20 Mol % BIPS
100 Mol % TCD-Diamin

werden in einen durch ein Metallbad beheizbaren Glaskolben 38,8 g (0,2 Mol) Terephthalsäuredimethylester und 80,76 g (0,4 Mol + 3 % Überschuß) TCD-Diamin, zusammen mit 50 ml Wasser eingefüllt und zwecks Aminolyse unter Überleiten eines Stickstoffstromes für 4,5 h unter Rühren auf 110 °C erhitzt. Nach Zugabe von 27,6 g (0,12 Mol) Decandicarbonsäure und 17,8 g (0,08 Mol) tert. Butylisophthalsäure wird weitere 30 min. bei 110 °C zur Salzbildung und Homogenisierung gerührt und zum Entfernen der flüchtigen Kondensationsprodukte innerhalb von 1,5 Stunden gleichmäßig auf 195 °C und innerhalb weiterer 1,5 Stunden bis auf 260 °C aufgeheizt.

Nach einer weiteren Temperaturerhöhung auf 290 °C wird 4 Std. lang auskondensiert. Trotz der im Glaskolben drucklosen Fahrweise ist der Ansatz in jeder Reaktionsphase rührbar ; eine Bildung von Festprodukten in der Salz- oder Oligomerenphase tritt nicht ein.

Es wird ein nahezu farbloses, transparentes Polyamid erhalten mit $\eta_{red}$ = 1,88 dl/g (1 %ig in Phenol/o-Dichlorbenzol = 60/40) und einer Glastemperatur (DSC-Methode) Tg = 175 °C. Das Polyamid wird zu einer 1 mm dicken Platte verpreßt, welche nach einer Lagerung von 2 180 Stunden in siedendem Wasser weder Eintrübung noch Deformation zeigt. Die Wasseraufnahme unter diesen Bedingungen ist 4,9 Gew.-%.

Unter Druck in Wasser von 121 °C gelagert, zeigt die Platte nach 48 Stunden noch keine Deformation oder Eintrübung.

## Beispiel 10

Zur Herstellung eines Polyamids der Rezeptur

40 Mol % TPS
30 Mol % DDS
30 Mol % BIPS
100 Mol % TCD-Diamin

werden in einen Glaskolben, wie in Beispiel 9 verwendet, 80,7 g (0,4 Mol + 3 % Überschuß) TCD-Diamin, 50 ml Wasser, 26,5 g (0,16 Mol) Terephthalsäure, 27,6 g (0,12 Mol) Decandicarbonsäure und 26,6 g (0,12 Mol) tert.-Butyl-isophthalsäure eingefüllt und der Ansatz unter Rühren und Überleiten eines schwachen

# 0 050 742

Stickstoffstromes zunächst auf 110 °C für 30 Minuten, dann wie in Beispiel 9 während 3 Stunden auf 260 °C aufgeheizt.

Nach einer weiteren Temperaturerhöhung auf 290 °C wird 4 h lang auskondensiert. Auch bei diesem Ansatz war das Polyamid in jeder Reaktionsphase rührbar.

Es wird ein nahezu farbloses, transparentes Polyamid erhalten mit $\eta_{red}$ = 1,43 dl/g und Tg = 177 °C.

Der Polyamid-Block wird zu einer 1 mm dicken Platte verpreßt, welche nach einer Lagerung von bisher 2 180 Std. in siedendem Wasser weder Eintrübung noch Deformation zeigt. Die Wasseraufnahme unter diesen Bedingungen 4,6 Gew.-%.

Unter Druck in Wasser von 121 °C gelagert, zeigt die Platte nach 48 Std. noch keine Deformation oder Eintrübung.

## Vergleichsbeispiel A

(nach DE-A-28 32 468)

Zur Herstellung eines Polyamids der Rezeptur
100 Mol % TPS
 75 Mol % 2,2,4(2,4,4)-Trimethylhexamethylendiamin
 25 Mol % TCD-Diamin

werden 1 552 g (8 Mol) Terephthalsäuredimethylester, 966,8 g (6 Mol + 2 % Überschuß) Trimethylhexamethylendiamin und 403,6 g (2 Mol) TCD-Diamin zusammen mit 3 l Wasser in einen Autoklaven chargiert und zur Aminolyse 3,5 Std. unter Druck auf 125 °C erhitzt. Unter weiterer Temperatursteigerung und Entspannung wird Methanol und Wasser abdestilliert und bei 290 °C auskondensiert.

Das transparente, nahezu farblose Polyamid wird durch ein Wasserbad ausgesponnen und granuliert und zu Prüfkörpern verarbeitet.

$$\eta_{red} = 1,68 \text{ (dl/g)}$$

$$Tg = 176 \text{ °C}$$

Kochwasserbeständigkeit 1): nach 24 Stunden Schlierenbildung ; Platte deformiert. Nach 72 Stunden Platte eingetrübt.

Wasseraufnahme 2) im Siedewasser nach 336 Std.  8,2 Gew.-%

Sterilisationsfestigkeit 2) in Wasser bei 121 °C unter Druck Beginn der Eintrübung nach 4 Std., nach 15 Std, opak und deformiert

1) 1 mm Preßplatte als Prüfkörper  2) Normkleinstäbe als Prüfkörper

**Anspruch** (für die Vertragsstaaten : BE, CH, DE, FR, GB, IT, LI, LU, NL, SE)

Polyamide, erhalten durch Polykondensation eines Gemisches aus

a) 10-50 Mol % Decandicarbonsäure,
b) 10-80 Mol % 5-tert-Butyl-isophthalsäure
c) 0-70 Mol % Isophthalsäure und/oder Terephthalsäure sowie
d) 100 Mol % 3(4), 8(9) Bisaminomethyltricyclo-[5.2.1.0$^{2,6}$]-decan,

worin stets die Summe aus den Dicarbonsäurekomponenten a) + b) + c) = 100 Mol % sein muß.

**Anspruch** (für den Vertragsstaat AT)

Verfahren zur Herstellung von Polyamiden, dadurch gekennzeichnet, daß man die Komponenten in folgenden Molverhältnissen polykondensiert :

a) 10-50 Mol % Decandicarbonsäure,
b) 10-80 Mol % 5-tert-Butyl-isophthalsäure,
c) 0-70 Mol % Isophthalsäure und/oder Terephthalsäure sowie
d) 100 Mol % 3(4), 8(9) Bisaminomethyltricyclo-[5.2.1.0$^{2,6}$]-decan,

wobei stets die Summe aus den Dicarbonsäurekomponenten a) + b) + c) = 100 Mol % sein muß.

5

**Claim** (for the Contracting States : BE, CH, DE, FR, GB, IT, LI, LU, NL, SE)

Polyamides obtained by polycondensation of a mixture of

a) 10-50 mol % decanedicarboxylic acid,
b) 10-80 mol % 5-tert-butyl-isophthalic acid
c) 0-70 mol % isophthalic acid and/or terephthalic acid and
d) 100 mol % 3(4), 8(9) bisamino methyl tricyclo-[5.2.1.0$^{2,6}$]-decane,

wherein the sum of the dicarboxylic acid components a) + b) + c) must always = 100 mol %.

**Claim** (for the Contracting State AT)

Process for the production of polyamides, characterised in that there are polycondensed in the following molar contents, the components :

a) 10-50 mol % decanedicarboxylic acid,
b) 10-80 mol % 5-tert-butyl-isophthalic acid,
c) 0-70 mol % isophthalic acid and/or terephthalic acid and
d) 100 mol % 3(4), 8(9) bisamino methyl tricyclo-[5.2.1.0$^{2,6}$]-decane,

wherein the sum of the dicarboxylic acid components a) + b) + c) must always = 100 mol %.

**Revendication** (pour les Etats contractants : BE, CH, DE, FR, GB, IT, LI, LU, NL, SE)

Polyamides obtenus par polycondensation d'un mélange de

a) 10 à 50 % molaire d'acide décanedicarboxylique,
b) 10 à 80 % molaire d'acide 5-tert-butylisophtalique,
c) 0 à 70 % molaire d'acide isophtalique et/ou d'acide téréphtalique, ainsi que de
d) 100 % molaire de 3(4), 8(9) bisaminométhyltricyclo-[5.2.1.0$^{2,6}$]-décane,

la somme des constituants à base d'acides dicarboxyliques a) + b) + c) devant toujours être égale à 100 % molaire.

**Revendication** (pour l'Etat contractant AT)

Procédé de préparation de polyamides, caractérisé en ce qu'on polycondense les composants selon les rapports molaires suivants :
a) 10-50 % molaire d'acide décanedicarboxylique,
b) 10-80 % molaire d'acide 5-tert-butyl-isophtalique,
c) 0-70 % molaire d'acide isophtalique et/ou d'acide téréphtalique, et
d) 100 % molaire de 3(4), 8(9)-bisaminométhyltricyclo-[5.2.1.0$^{2,6}$]-décane

où la somme des composants acide dicarboxylique a) + b) + c) doit toujours être égale à 100 % molaire.